# EUROPÄISCHE PATENTSCHRIFT

(11) **EP 3 036 806 B1**
(45) Veröffentlichungstag und Bekanntmachung des Hinweises auf die Patenterteilung: **15.07.2020**
(21) Anmeldenummer: 14771201.2
(22) Anmeldetag: 18.08.2014
(51) Int. Cl.: H02G 3/04

(54) **KABELKANAL SOWIE VERFAHREN ZUM HERSTELLEN EINES DREIDIMENSIONAL VERLAUFENDEN KABELKANALS**
CABLE DUCT AND METHOD FOR PRODUCING A THREE-DIMENSIONAL CABLE DUCT
CONDUIT DE CÂBLE ET PROCÉDÉ DE FABRICATION D'UN CONDUIT DE CÂBLE S'ÉTENDANT EN TROIS DIMENSIONS

(30) Priorität: 21.08.2013 DE 102013216581
(43) Veröffentlichungstag der Anmeldung: 29.06.2016
(73) Patentinhaber: LEONI Bordnetz-Systeme GmbH, 97318 Kitzingen (DE)
(72) Erfinder: DOHLUS, Peter, 90491 Nürnberg (DE); STEINER, Peter, 96152 Burghaslach (DE)
(74) Vertreter: FDST Patentanwälte
(86) Internationale Anmeldenummer: PCT/EP2014/067598
(87) Internationale Veröffentlichungsnummer: WO 2015/024914

(56) Entgegenhaltungen:
- EP-A1- 1 026 802
- DE-A1-102005 046 194
- DE-U1- 9 412 641
- GB-A- 2 206 455
- GB-A- 2 207 561
- JP-A- H10 313 519
- US-A- 3 441 975
- US-A1- 2003 159 846
- US-A1- 2003 207 602
- US-A1- 2009 211 781

## Beschreibung

Die Erfindung betrifft einen Kabelkanal mit einer dreidimensionalen Verlegestruktur sowie ein Verfahren zum Herstellen eines solchen dreidimensional verlaufenden Kabelkanals.

Dreidimensionale Kabelkanäle sind beispielsweise zu entnehmen aus der GB 2206455 A, der US 2003/0207602 A1, der US 2009/0211781 A1, der GB2207561A, der US2003159846A1 oder auch der EP 1 026 802 A1.

Aus der DE 94 12 641 U1 ist ein Kabelkanalprofil aus einem extrudierten Endlosband zu entnehmen, bei dem in Längsrichtung verlaufende Wandabschnitte über Scharnierstege miteinander verbunden sind.

Weiterhin ist aus der JP H10 313519A ein Schutzelement für ein Kabelbündel beschrieben, welches zwei über ein Gelenk miteinander verbundene Aufnahmekörper für das Kabelbündel aufweist. An den Aufnahmekörpern ist jeweils eine Lasche angeformt, an der das Kabelbündel mittels einer Bandierung befestigt werden kann.

Unter dreidimensional verlaufende Kabelkanäle oder Kabelkanäle mit dreidimensionaler Verlegestruktur werden solche Kabelkanäle verstanden, deren bodenseitig begrenzender Kanalboden sich - in Verlaufsrichtung in Kabellängsrichtung - nicht nur innerhalb einer Ebene erstreckt, sondern der sich in drei Raumrichtung ausbreitet, also sich aus einer Grundebene auch in eine dritte Raumrichtung, nachfolgend als z-Richtung bezeichnet, erstreckt. Derartige Kabelkanäle werden beispielsweise in der Kraftfahrzeugindustrie zur Führung von Leitungen oder Kabelsätze um Einbauten herum eingesetzt.

Bei diesen dreidimensional verlaufenden Kabelkanälen handelt es sich üblicherweise um geschlossene Kabelkanäle, die also mit einem Kanaldeckel verschlossen sind, der üblicherweise parallel zum Kanalboden verläuft. Der genaue Verlauf des Kabelkanals ist dabei grundsätzlich abhängig vom gewählten Einsatzort im Fahrzeug. Am Kanalboden schließen sich seitlich Seitenwände an. Diese bilden gemeinsam mit dem Kanalboden im Querschnitt senkrecht zu einer Kanallängsrichtung gesehen ein etwa U-förmiges Bauteil aus. Zur Montage wird der Kanalboden mit dem Kanaldeckel beispielsweise über Schnappverbindungen verbunden. Aufgrund der dreidimensionalen Verlegestruktur sind die Herstellungskosten für derartige spezielle Bauteile sehr hoch. So müssen aufwendige Werkzeuge bereit gestellt werden und zwar jeweils für den Kanalboden als auch für den Kanaldeckel.

Ausgehend hiervon liegt der Erfindung die Aufgabe zu Grunde, einen Kabelkanal anzugeben, der sich kostengünstig herstellen lässt. Weiterhin liegt der Erfindung die Aufgabe zu Grunde, ein kostengünstiges Verfahren zur Herstellung eines derartigen dreidimensional verlaufenden Kabelkanals anzugeben.

Die Aufgabe wird erfindungsgemäß gelöst durch einen Kabelkanal mit den Merkmalen des Anspruchs 1 sowie durch ein Verfahren mit den Merkmalen des Anspruchs 11. Die im Hinblick auf den Kabelkanal angeführten Vorteile bevorzugten Ausgestaltungen sind sinngemäß auch auf das Verfahren zu übertragen.

Der Kabelkanal weist danach eine dreidimensionale Verlegestruktur auf, umfasst also einen Kanalboden, der sich in drei Raumrichtungen ausbreitet. Er umfasst eine Bodenseite sowie Seitenwände, wobei der Verlauf der Bodenseite und damit des Kanalbodens dreidimensional ist, sich also innerhalb einer Grundebene und zusätzlich in eine Z-Ebene erstreckt. Der Kanalboden ist unterteilt in mehrere Bodensegmente, die im Endzustand in z-Richtung winklig zueinander orientiert sind. Zumindest eines der Bodensegmente tritt also aus der Grundebene heraus und erstreckt sich in z-Richtung und ist im montierten Endzustand winklig zu an einem benachbarten Bodensegment angeordnet. Die Bodensegmente bilden dabei ein gemeinsames Spritzguss-Bauteil und sind scharnierartig miteinander verbunden, so dass alle Bodensegmente sich zumindest im Wesentlichen in die Grundebene aufhalten lassen.

Diese Ausgestaltung geht von der Grundidee aus, den dreidimensionalen Verlauf des Kanalbodens in eine Ebene aufzufalten, d. h. der Kanalboden wird in die verschiedenen Bodensegmente unterteilt, die nicht scharnierartig miteinander verbunden sind und kein eigensteifes Bauteil bilden. Bei der Herstellung dieses aufgefalteten Kanalbodens, der aus mehreren miteinander verbundenen Bodensegmenten besteht, ist daher eine vergleichsweise einfache Werkzeugform ausreichend im Vergleich zur Herstellung eines Kanalbodens, da das zu fertigende Spritzguss-Bauteil sich im Wesentlichen lediglich innerhalb einer Ebene erstreckt. Zur Ausbildung des dreidimensionalen Verlaufs des Kabelkanals brauchen anschließend die Bodensegmente lediglich zueinander abgewinkelt und in die gewünschte dreidimensionale Struktur gebracht zu werden.

Unter dem Begriff "zumindest im Wesentlichen in die Grundebene auffalten lassen" wird hierbei verstanden, dass im aufgefalteten Zustand die Bodenseiten aller Bodensegmente innerhalb einer gemeinsamen Ebene, nämlich der Grundebene liegen bzw. sich nur geringfügig aus dieser Grundebene in die z-Richtung heraus erstrecken. Eine eventuelle Erstreckung in z-Richtung der einzelnen Bodenseiten beschränkt sich vorzugsweise auf die vorzugsweise die einfache, ggf. auch die zweifache Höhe der Seitenwände und beträgt jedoch maximal etwa 20% vorzugsweise 10% der Höhe in z-Richtung des endmotierten, dreidimensionale verlaufenden Kanals. Diese Erstreckung in z-Richtung ist beispielsweises dann von Vorteil, wenn der Kanalboden sich nicht ausschließlich linear erstreckt sondern sich auch aus gekrümmten Teilbereichen zusammensetzt, die beim Auffalten zwangsweise eine gewisse Erstreckung z-Richtung aufweisen.

Zweckdienlicherweise sind dabei die Bodensegmente, die sich in einer Kanallängsrichtung aneinander anschließen, über Filmscharniere miteinander verbunden. Dies ist herstellungstechnisch besonders einfach, da hierzu in der Werkzeugform lediglich eine Engstelle eingebracht werden muss. Diese Filmscharniere erstrecken sich dabei zweckdienlicherweise über die gesamte Kanalbreite.

Die Bodensegmente sind dabei bevorzugt zueinander beweglich angeordnet. Es ist daher für den Montageendzustand gemäß dieser Ausführungsvariante keine Fixierung des Kabelkanals im dreidimensionalen Verlauf vorgesehen. Gemäß einer alternativen bevorzugten Ausgestaltung werden die einzelnen Bodensegmente bei zueinander mechanisch fixiert, so dass der Montageendzustand ein eigensteifes Bauteil mit dreidimensionaler Verlaufs - oder Verlegestruktur bildet.

Die Seitenwände sind durch erste Seitenteile gebildet, die jeweils an einem jeweiligen Bodensegment angeformt sind. Die Seitenteile bilden daher mit den Bodensegmenten insgesamt das gemeinsame Spritzgussteil. Die Seitenteile stehen dabei regelmäßig in Querrichtung zur Kanallängsrichtung winklig zu den Bodensegmenten ab, insbesondere rechtwinklig. Jedes Bodensegment ist daher insgesamt in etwa U-förmig im Querschnitt betrachtet ausgebildet.

Vorzugsweise umfasst der Kanalboden zumindest einen, sich in z-Richtung erstreckenden und gekrümmten Bereich, welcher wahlweise ein eigenes weiteres Bodensegment bildet oder zumindest Teil eines anderen Bodensegments ist. Durch diese Maßnahmen werden auch gekrümmte Teilbereiche zumindest weitgehend in die Grundebene aufgefaltet.

Weiterhin ist der Kabelkanal ergänzend mit einem Kanaldeckel ausgebildet, welcher über Verbindungselemente mit den Seitenwänden verbunden ist. Es handelt sich daher um einen geschlossenen Kabelkanal, welcher lediglich in einer Kanallängsrichtung oder Erstreckungsrichtung stirnseitige Öffnungen aufweist. Diese Verbindungselemente sind dabei vorzugsweise als Rast- und Schnappelemente ausgebildet, so dass ein einfaches, werkzeugfreies Verschließen des Kabelkanals bei der Montage ermöglicht ist.

Der Kanaldeckel ist korrespondierend zum Kanalboden dreidimensional verlaufend ausgebildet, erstreckt sich daher ebenfalls in drei Raumrichtungen. Korrespondierend zum Kanalboden ist auch der Kanaldeckel in mehrere Deckelsegmente unterteilt, die im montierten Endzustand in z-Richtung winklig zueinander orientiert sind. Die Deckelsegmente sind dabei wiederum Teil eines gemeinsamen Spritzguss-Bauteils oder bilden ein solches und lassen sich zumindest im Wesentlichen in die Grundebene auffalten. Auch der Kanaldeckel wird daher durch eine lediglich zweidimensionale Spritzguss-Form hergestellt, die im Vergleich zu einer dreidimensionalen Form deutlich einfacher ist. Zur Montage werden die einzelnen Deckelsegmente wieder in einfacher Weise zueinander abgewinkelt, um die gewünschte dreidimensionale Verlegestruktur auszubilden. Die einzelnen Deckelsegmente sind also wiederrum zumindest mittelbar scharnierartig miteinander verbunden.

In besonders bevorzugter Ausgestaltung bilden dabei die Deckelsegmente gemeinsam mit den Bodensegmenten das einstückige gemeinsame Spritzguss-Bauteil. Die einzelnen Segmente sind untereinander dabei jeweils scharnierartig miteinander verbunden. Sämtliche Segmente des Kabelkanals lassen sich daher im Wesentlichen in die Grundebene auffalten. Hierdurch wird der besondere Vorteil erzielt, dass lediglich eine einzige Werkzeugform benötigt wird, um einen geschlossenen Kabelkanal mit dreidimensionaler Verlegestruktur auszubilden. Im Vergleich zu dem Stand der Technik, wonach zwei getrennte Werkzeugformen erforderlich sind, ist dadurch eine erhebliche Kostenersparnis erzielt.

Zweckdienlicherweise ist dabei ein jedes Deckelsegment scharnierartig seitlich an ein ihm zugeordnetes Bodensegment befestigt, insbesondere über ein Filmscharnier.

Bevorzugt sind dabei die Deckelsegmente über Verbindungslaschen mit den Bodensegmenten verbunden. Über diese Verbindungslaschen wird eine verbesserte Schwenkbeweglichkeit erreicht, um das jeweilige Deckelsegment über das zugeordnete Bodensegment verschwenken zu können.

Zweckdienlicherweise sind an den Deckelsegmenten jeweils zweite Seitenteile angeformt, so dass die Deckelsegmente mit den Seitenteilen im Querschnitt ein U-förmiges Bauteil bilden. In zweckdienlicher Weiterbildung werden die Seitenteile des Deckelsegments mit denen des zugeordneten Bodensegments über die Verbindungselemente verbunden sind.

In vorteilhafter Weiterbildung weisen die einzelnen Segmenten zweckdienlicherweise in Teilbereichen reduzierte Wandstärken oder Materialaussparungen auf. Im letztgenannten Fall ist die Oberfläche des Kabelkanals durch Freimachungen unterbrochen. Insgesamt ist der Kabelkanal bevorzugt etwa netzartig mit die Stabilität definierenden Streben und Bereichen dazwischen mit reduzierter Wandstärke oder eben mit Durchbrüchen oder insgesamt perforiert ausgebildet. Hierdurch ist die Grundstabilität grundsätzlich nicht oder nur unbedeutend beeinflusst. Gleichzeitig wird der erforderliche Materialeinsatz verringert, was in besonders vorteilhafter Weise zu Gewichts- und Kosteneinsparungen führt. Bevorzugt wird die Variante mit den variierenden Wandstärken anstelle eines vollständigen Materialdurchbruchs. In Bereichen, in denen keine mechanische Stabilitätsanforderungen bestehen, wird die Wandstärke auf ein Minimum reduziert. Dies ist dann von Vorteil, wenn eine geschlossene Oberfläche erforderlich oder gewünscht ist und ist auch werkzeugtechnisch einfacher umzusetzen.

Ein Ausführungsbeispiel der Erfindung wird nachfolgend anhand der Figuren näher erläutert. Diese zeigen:
- Fig. 1: in eine perspektivischen Ansicht ein aufgefaltetes Spritzgussteil mit scharnierartig aneinander angelenkten Bodensegmenten und Deckelsegmenten,
- Fig. 2: das Spritzguss-Bauteil gemäß Figur 1 in einer Seitenansicht, sowie
- Fig. 3: ein herkömmlicher Kabelkanal mit einer dreidimensionalen Verlegestruktur mit getrennten Kanalboden und Kanaldeckel, die nach Art einer Explosionsdarstellung dargestellt ist.

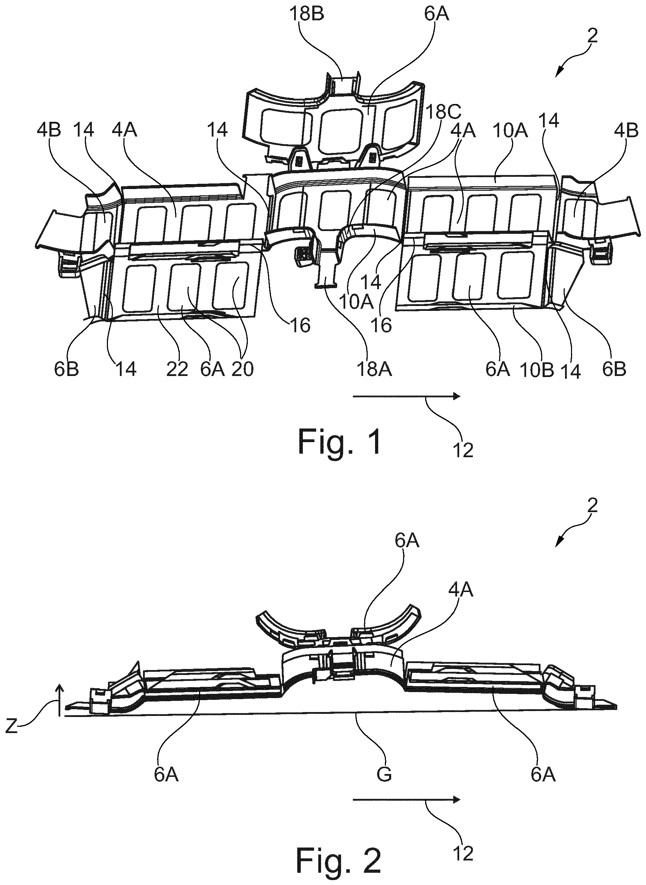

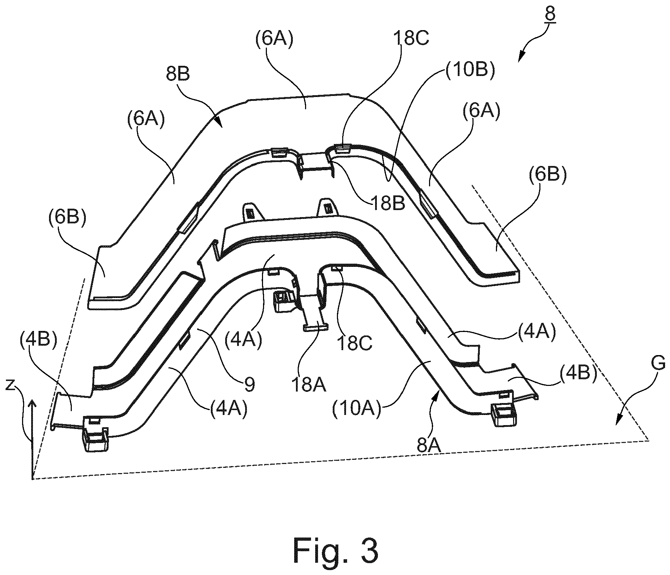

In den Figuren sind gleichwirkende Teile mit den gleichen Bezugszeichen versehen. In den Figuren 1 und 2 ist ein aufgefaltetes Spritzgussteil 2 dargestellt, welches mehrere aneinander gelenkig gefestigte Segmente aufweist, nämlich Bodensegmente 4A,B sowie Deckelsegmente 6A,6B. Dieses Spritzgussteil 2 wird mit nur einer Werkzeugform in einem einzigen Spritzguss-Schritt hergestellt. Aus diesen Spritzgussteil 2 wird anschließend in einem zweiten Schritt durch Aufklappen der einzelnen Segmente 4A,4B,6A,6B ein Kabelkanal 8 ausgebildet, der den in Figur 3 dargestellten dreidimensionalen Verlauf einnimmt.

Bei der Figur 3 handelt es sich dabei um eine Explosionsdarstellung einer herkömmlichen, aus einem Oberteil und einem von diesem getrennten Unterteil gebildeten Kabelkanal 8. Dieser umfasst daher allgemein einen das Unterteil bildenden Kanalboden 8B und einen das Oberteil bildenden Kanaldeckel 8B. Der Kanalboden 8B weist seitlich angeformte Seitenwände 9 auf. Dieser Kabelkanal 8 wird durch das gemeinsame Spritzgussteil 2 identisch nachgebildet. Das Spritzgussteil 2 gemäß den Figuren 1 und 2 entspricht daher einer Auffaltung des Kabelkanals 8. Aus dem aufgefalteten Spritzgussteil 2 wird durch Abwinkeln der einzelnen Segmente 4A, 4B, 6A,6B zueinander in der montierten Endstellung die dreidimensionale Verlaufsstruktur des Kabelkanals 8 gebildet.

Unter dreidimensionaler Verlegestruktur oder dreidimensionaler Verlauf wird hierbei allgemein verstanden, dass sich ein Erstreckungsvektor, welcher die Ausbreitungsrichtung des Kabelkanals 8, also dessen Längsrichtung angibt, nicht nur innerhalb einer Ebene verläuft, die nachfolgend als Grundebene G bezeichnet wird, sondern dass dieser Erstreckungsvektor auch in eine dritte Richtung, nämlich der z-Richtung orientiert ist, die aus der Grundebene G heraustritt.

Wie anhand der Figuren 1 und 2 dargestellt ist, ist diese dreidimensionale Verlaufsstruktur insgesamt zumindest im Wesentlichen in die Grundebene G aufgefaltet, so dass im Ausgangsstadium eine im Wesentlichen zweitdimensionale Formgebung des Spritzgussteils 2 geschaffen ist. Unter im Wesentlichen zweidimensional wird hierbei verstanden, dass die Bodenseiten der einzelnen Bodensegmente 4A,4B sowie die Deckenseiten der Deckelsegmente 6A,6B bis auf eventuell gekrümmte Teilbereiche zumindest im Wesentlichen innerhalb der Grundebene G verlaufen und allenfalls geringfügig über die Grundebene G, beispielsweise maximal bis zur einfachen oder doppelten Höhe der Seitenwände 9, in z-Richtung heraustreten.

Im Ausführungsbeispiel schließt sich an einen mittleren Bodensegment 4A in Kanallängsrichtung 12 beidseitig ein jeweils über ein Filmscharnier 14 angebundenes weiteres seitliches Bodensegment 4A an. Über weitere Filmscharniere 14 schließen sich an diesen seitlichen Bodensegmenten 4A jeweils ein weiteres, gekrümmtes Bodensegment 4B an. Der besseren Vergleichbarkeit halber sind die einzelnen Segmentbereiche auch bei der in der Figur 3 dargestellten dreidimensionalen Struktur mit in Klammern gesetzten Bezugszeichen dargestellt.

Korrespondieren zu den sich zumindest bereichsweise geradlinig erstreckenden Haupt-Bodensegmenten 4A weist das Spritzgussteil 2 sich ebenfalls zumindest bereichsweise geradlinig erstreckende Haupt-Deckelsegmente 6A auf. Diese sind untereinander allerdings in Kanallängsrichtung nicht unmittelbar aneinander befestigt, sondern lediglich an einem ihnen jeweils zugeordneten Bodensegment 4A. Hierbei sind sie in Kanallängsrichtung 12 betrachtet alternierend auf unterschiedlichen Seiten der Bodensegmente 4A angebracht. Die Deckelsegmente 6A sind hierbei über Verbindungslaschen 16 mit den jeweiligen Bodensegmenten 4A,4B verbunden.

Korrespondierend zu den gekrümmten weiten Bodensegmenten 4B sind auch an den randseitigen Deckelsegmenten 6A weitere Deckelsegmente 6B angeformt, die ebenfalls zumindest einen gekrümmten Abschnitt aufweisen. Diese weiteren Deckelsegmente 6B sind über Filmscharniere 14 an den Haupt-Deckelsegmenten 6A gelenkig befestigt. Wie weiterhin insbesondere auch zur Seitenansicht gemäß Figur 2 zu entnehmen ist, sind die mittleren Haupt-Segmente 4A,6A zur Randseite hin jeweils gekrümmt ausgebildet.

An jeden der Segmente 4A,B;6A,B sind jeweils Seitenteile 10A,10B angeformt, nämlich an den Bodensegmenten 4A,B erste Seitenteile 10A und an den Deckelsegmenten 6A,B zweite Seitenteile 10B. Diese erstrecken sich üblicherweise rechtwinklig zur Boden bzw. Deckelfläche. Die Bodensegmente 4A,B bilden zusammen mit den Seitenteilen 10A jeweils U-förmige Bauteile. Dem gegenüber ist an den Haupt-Deckelsegmenten 6A lediglich an einer Seite ein Seitenteil 10B ausgebildet, und zwar an der den Verbindungslaschen 16 gegenüberliegenden Randseite. Lediglich bei dem mittleren Deckelsegment 6A sind beidseitig Seitenteile 10B ausgebildet.

An den zueinander korrespondierenden Seitenteilen 10A,10B sind vorzugsweise Verbindungselemente 18 ausgebildet, die nach Art von Laschen 18A, Laschenaufnahmen 18B oder auch Rastelementen 18C ausgebildet sind.

Zum Herstellen des Spritzgussbauteils 2 wird lediglich eine einzige Werkzeugform mit einer zum Spritzgussbauteil 2 korrespondierenden Negativform verwendet. Diese weist insbesondere zwei Formhälften auf, deren Trennungsebene vorzugsweise zumindest annähernd entlang der Grundebene G verläuft. Der Spritzgussprozess erfolgt in üblicher Weise, indem das Spritzmaterial, üblicherweise Kunststoff, in zähflüssiger Form eingebracht und anschließend ausgehärtet wird.

Nach Herstellung des in den Figuren 1 und 2 dargestellten Spritzgussteils werden die einzelnen Segmente 4A,4B,6A,6B zueinander abgewinkelt und in die in Figur 3 dargestellte dreidimensionale Verlegestruktur gebracht. Die Deckelsegmente 6A,6B werden über das jeweils zugeordnete Bodensegment 4A,4B geschwenkt und anschließend werden die einzelnen Segmente 4A,4B,6A,6B miteinander über die Verbindungselemente 18A,B, C aneinander befestigt, so dass sich der Kabelkanal 8 mit der dreidimensionalen Verlaufsstruktur ergibt.

Wie insbesondere weiterhin aus der Figur 1 zu erkennen ist, weisen sowohl die Bodensegmente 4A,B als auch die Deckelsegmente 6A jeweils mehrere Teilbereiche 20 mit reduzierter Wandstärke auf, wodurch sowohl der Materialeinsatz als auch das Gewicht reduziert ist. Im Ausführungsbeispiel sind die Teilbereiche 20 durch großflächige Flächenbereiche gebildet, die durch Stege 22 voneinander begrenzt sind. Im Ausführungsbeispiel sind die Teilbereiche 20 etwa rechteckförmig ausgebildet und erstrecken sich über weitgehend die gesamte Kanalbreite zwischen den Seitenteilen 10A, 10B.

### Bezugszeichenliste

- 2: Spritzgussteil
- 4A,B: Bodensegment
- 6A,B: Deckelsegment
- 8: Kabelkanal
- 8A: Kanalboden
- 8B: Kanaldeckel
- 9: Seitenwand
- 10A,B: Seitenteil
- 12: Kanallängsrichtung
- 14: Filmscharnier
- 16: Verbindungslasche
- 18A: Lasche!
- 18B: Laschenaufnahme
- 18C: Rastelement
- 20: Teilbereich
- 22: Stege
- G: Grundebene

## Patentansprüche

1. Kabelkanal (8), der sich in einer Kanallängsrichtung (12) erstreckt umfassend einen Kanalboden (8A) mit Seitenwänden (9), wobei der Kanalboden (8A) eine dreidimensionale Verlegestruktur aufweist und hierzu innerhalb einer Grundebene (G) und zusätzlich in eine z-Richtung verläuft und unterteilt ist in mehrere Bodensegmente (4A,B), wobei die Seitenwände (9) gebildet sind durch erste Seitenteile (10A), die an einem jeweiligen Bodensegment (4A,B) angeformt sind, so dass ein jeweiliges Bodensegment (4A,B) im Querschnitt betrachtet etwa U-förmig ausgebildet ist, wobei die Bodensegmente (4A,B) ein gemeinsames Spritzguss-Bauteil (2) bilden und in Kanallängsrichtung (12) scharnierartig miteinander verbunden sind, so dass alle Bodensegmente (4A,B) sich zumindest im Wesentlichen in die Grundebene (G) auffalten lassen, wobei der Kabelkanal (8) weiterhin einen Kanaldeckel (8B) aufweist, der über Verbindungselemente (18A,B,C) mit den Seitenwänden (9) verbunden ist, wobei der Kanaldeckel (8B) korrespondierend zu dem Kanalboden (8A) eine dreidimensionale Verlegestruktur aufweist und in mehrere Deckelsegmente (6A,B) unterteilt ist, die untereinander zumindest mittelbar scharnierartig miteinander verbunden sind und sich zumindest im Wesentlichen in die Grundebene (G) auffalten lassen.

2. Kabelkanal (8) nach Anspruch 1, wobei die Bodensegmente (4A,B) über Filmscharniere (14) miteinander verbunden sind.

3. Kabelkanal (8) nach Anspruch 1 oder 2, bei dem die Bodensegmente (4A,B) zueinander beweglich sind.

4. Kabelkanal (8) nach einem der vorhergehenden Ansprüche, bei dem der Kanalboden (8A) zumindest einen sich in z-Richtung erstreckenden gekrümmten Bereich aufweist, der wahlweise ein weiteres Bodensegment (4B) bildet oder der zumindest Teil eines der Bodensegmente (4A) ist.

5. Kabelkanal (8) nach einem der vorhergehenden Ansprüche, bei dem die Verbindungselemente wahlweise als Laschen (18A), Laschenaufnahmen (18B) oder Rastelemente (18C) ausgebildet sind.

6. Kabelkanal (8) nach einem der vorhergehenden Ansprüche, wobei die Deckelsegmente (6A,B) und die Bodensegmente (4A,B) gemeinsam das Spitzguss-Bauteil (2) bilden.

7. Kabelkanal (8) nach einem der vorhergehenden Ansprüche, wobei die Deckelsegmente (6A,B) über Verbindungslaschen (16) mit den Bodensegmenten (4A,B) verbunden sind.

8. Kabelkanal (8) nach einem der vorhergehenden Ansprüche, wobei an den Deckelsegmenten (6A,B) jeweils zweite Seitenteile (10B) angeformt sind, wobei die zweiten Seitenteile (10B) mit den ersten Seitenteilen (10A) verbunden sind.

9. Kabelkanal (8) nach einem der vorhergehenden Ansprüche, wobei die einzelnen Segmente(4A,B; 6A,B) in Teilbereichen (20) reduzierte Wandstärken oder Materialaussparungen aufweisen.

10. Kabelkanal (8) nach dem vorhergehenden Anspruch, wobei der Kabelkanal (8) netzartig ausgebildet ist mit die Stabilität definierenden Streben und mit den dazwischen angeordneten Teilbereichen (20), die großflächig ausgebildet und durch Stege (22) voneinander getrennt sind.

11. Verfahren zum Herstellen eines dreidimensional verlaufenden Kabelkanals (8) nach einem der vorhergehenden Ansprüche mit einem Kanalboden (8A) und mit sich hieran anschließenden Seitenwänden (9), wobei der Kabelkanal (8) weiterhin einen Kanaldeckel (8B) aufweist, der über Verbindungselemente (18A,B,C) mit den Seitenwänden (9) verbunden ist, wobei der Kanaldeckel (8B) korrespondierend zu dem Kanalboden (8A) eine dreidimensionale Verlegestruktur aufweist und in mehrere Deckelsegmente (6A,B) unterteilt ist, die untereinander zumindest mittelbar scharnierartig miteinander verbunden sind und sich zumindest im Wesentlichen in die Grundebene (G) auffalten lassen, wobei in einem ersten Schritt mit Hilfe einer Werkzeugform ein aufgefalteter Kanalboden hergestellt wird bestehend aus mehreren Bodensegmenten (4A,B), die im Wesentlichen innerhalb einer Grundebene (G) verlaufen und die miteinander scharnierartig verbunden sind und wobei in einem zweiten Schritt die Bodensegmente (4A,B) an den Scharniergelenken zueinander zur Ausbildung des dreidimensionalen Verlaufs abgewinkelt werden.

12. Verfahren nach Anspruch 11, bei dem im ersten Schritt mit Hilfe der einen Werkzeugform ein Kabelkanal (8) mit dem Kanaldeckel (8B) vollständig als aufgefalteter Kabelkanal hergestellt wird.

## Claims

1. Cable duct (8) extending in a longitudinal duct direction (12), comprising a duct bottom (8A) with side walls (9), wherein the duct bottom (8A) has a three-dimensional laying structure and for this purpose extends within a ground plane (G) and additionally in a z-direction and is divided into several bottom segments (4A,B), wherein the side walls (9) are formed by first side parts (10A) formed on a respective bottom segment (4A,B), so that a respective bottom segment (4A,B) is approximately U-shaped when viewed in cross-section, wherein the bottom segments (4A,B) form a common injection-moulded component (2) and are connected to one another in a hinge-like manner in the longitudinal duct direction (12), so that all bottom segments (4A,B) can at least substantially be unfolded into the ground plane (G), the cable duct (8) further comprising a duct cover (8B) which is connected to the side walls (9) via connecting elements (18A,B,C), wherein the duct cover (8B) has a three-dimensional laying structure corresponding to the duct bottom (8A) and is divided into a plurality of cover segments (6A, B) which are connected to one another at least indirectly in a hinge-like manner and can be unfolded at least substantially in the ground plane (G).

2. Cable duct (8) according to Claim 1, wherein the bottom segments (4A,B) are connected to each other via film hinges (14).

3. Cable duct (8) according to Claim 1 or 2, in which the bottom segments (4A,B) are movable relative to one another.

4. Cable duct (8) according to one of the preceding claims, wherein the duct bottom (8A) has at least one z-directional curved region extending which optionally forms a further bottom segment (4B) or which is at least part of one of the bottom segments (4A).

5. Cable duct (8) according to one of the preceding claims, in which the connecting elements are optionally designed as tabs (18A), tab receptacles (18B) or latching elements (18C).

6. Cable duct (8) according to one of the preceding claims, wherein the cover segments (6A,B) and the bottom segments (4A,B) together form the injection-moulded component (2).

7. Cable duct (8) according to one of the preceding claims, wherein the cover segments (6A,B) are connected to the bottom segments (4A,B) via connecting tabs (16).

8. Cable duct (8) according to one of the preceding claims, wherein on the cover segments (6A,B) respectively second side parts (10B) are formed, wherein the second side parts (10B) are connected to the first side parts (10A).

9. Cable duct (8) according to one of the preceding claims, wherein the individual segments (4A,B; 6A,B) in partial regions (20) have reduced wall thicknesses or material recesses.

10. Cable duct (8) according to the preceding claim, wherein the cable duct (8) has a net-like structure with struts defining the stability and with partial regions (20) arranged therebetween, which are constructed over a large area and are separated from one another by webs (22).

11. Method of manufacturing a three-dimensionally extending cable duct (8) according to one of the preceding claims with a duct bottom (8A) and with adjoining side walls (9), wherein the cable duct (8) further comprises a duct cover (8B), which is connected to the side walls (9) via connecting elements (18A,B,C), wherein the duct cover (8B) has a three-dimensional laying structure corresponding to the duct bottom (8A) and is divided into a plurality of cover segments (6A,B), which are connected to one another at least indirectly in a hinge-like manner and can be unfolded at least substantially in the ground plane (G), wherein in a first step with the aid of a tool mould an unfolded duct bottom is produced, consisting of a plurality of bottom segments (4A, B) which extend substantially within a ground plane (G) and which are connected to one another in a hinge-like manner, and wherein in a second step the bottom segments (4A, B) are angled towards one another at the hinge joints to form the three-dimensional course.

12. Method according to Claim 11, in which in the first step with the aid of the one tool mould, a cable duct (8) with the duct cover (8B) is produced completely as an unfolded cable duct.

## Revendications

1. Conduit de câbles (8) s'étendant dans une direction longitudinale du conduit (12), comprenant un fond de conduit (8A) avec des parois latérales (9), dans lequel le fond de conduit (8A) a une structure de pose tridimensionnelle et s'étend à cet effet dans un plan de base (G) et en outre dans une direction z et est divisé en plusieurs segments de fond (4A,B), dans lequel les parois latérales (9) sont formées par des premières parties latérales (10A) formées sur un segment de fond respectif (4A,B), de sorte qu'un segment de fond respectif (4A,B) est approximativement en forme de U lorsqu'il est vu en coupe transversale, dans lequel les segments fond (4A,B) forment une commune pièce moulée par injection (2) et sont reliés entre eux à la manière d'une charnière dans la direction longitudinale du conduit (12), de sorte que tous les segments de fond (4A,B) peuvent être dépliés au moins sensiblement dans le plan de base (G), le canal de câbles (8) comprenant en outre un couvercle de canal (8B) qui est relié aux parois latérales (9) par des éléments de liaison (18A,B,C), le couvercle de conduit (8B) présentant une structure de pose tridimensionnelle correspondant au fond du conduit (8A) et étant divisée en plusieurs segments de couvercle (6A, B) reliés entre eux au moins indirectement à la manière de charnières et pouvant être repliés au moins sensiblement dans le plan de base (G).

2. Conduit de câbles (8) selon la revendication 1, dans lequel les segments de fond (4A,B) sont reliés entre eux par des charnières en film (14).

3. Conduit de câbles (8) selon la revendication 1 ou 2, dans lequel les segments de fond (4A,B) sont mobiles les uns par rapport aux autres.

4. Conduit de câbles (8) selon l'une des revendications précédentes, dans lequel le fond de conduit (8A) a au moins une partie incurvée s'étendant dans la direction z qui forme éventuellement un autre segment de fond (4B) ou qui fait au moins partie de l'un des segments de fond (4A).

5. Conduit de câbles (8) selon l'une des revendications précédentes, dans lequel les éléments de connexion sont sélectivement conçus comme des languettes (18A), des récepteurs de languettes (18B) ou des éléments de verrouillage (18C).

6. Conduit de câbles (8) selon l'une des revendications précédentes, dans lequel les segments de couvercle (6A,B) et les segments de fond (4A,B) forment ensemble la pièce moulée par injection (2).

7. Conduit des câbles (8) selon l'une des revendications précédentes, dans lequel les segments de couvercle (6A,B) sont reliés aux segments de fond (4A,B) par des languettes de connexion (16).

8. Conduit de câbles (8) selon l'une des revendications précédentes, dans lequel sur les segments de couvercle (6A,B) des deuxièmes parties latérales (10B) sont formées respectivement, les deuxièmes parties latérales (10B) étant reliées aux premières parties latérales (10A).

9. Conduit de câbles (8) selon l'une des revendications précédentes, dans lequel les différents segments (4A,B ; 6A,B) présentent des épaisseurs de paroi réduites ou des évidements de matériau dans des zones partielles (20).

10. Conduit de câbles (8) selon la revendication précédente, le conduit de câbles (8) étant construit à la manière d'un filet avec des entretoises définissant la stabilité et avec les zones partielles (20) disposées entre elles, qui sont construites sur une grande surface et sont séparées les unes des autres par des nervures (22).

11. Procédé de fabrication d'un conduit de câbles (8) s'étendant en trois dimensions selon l'une des revendications précédentes avec un fond de conduit (8A) et avec des parois latérales (9) se raccordant à ce dernier, dans lequel le conduit de câbles (8) comprend en outre un couvercle de conduit (8B), qui est relié aux parois latérales (9) par des éléments de liaison (18A,B,C), le couvercle de conduit (8B) présentant une structure de pose tridimensionnelle correspondant au fond de conduit (8A) et étant divisé en plusieurs segments de couvercle (6A,B), qui sont reliés entre eux au moins indirectement à la manière d'une charnière et qui peuvent être dépliés au moins sensiblement dans le plan de base (G), dans lequel, dans une première étape, un fond de conduit déplié est fabriqué à l'aide d'un moule à outil, constitué de plusieurs segments de fond (4A,B) s'étendant sensiblement à l'intérieur d'un plan de base (G) et reliés entre eux à la manière d'une charnière, et dans lequel, dans une deuxième étape, les segments de fond (4A,B) sont coudés les uns par rapport aux autres au niveau des articulations à charnière pour former le tracé tridimensionnel.

12. Procédé selon la revendication 11, dans lequel dans une première étape, à l'aide du seul moule à outil, un conduit de câbles (8) avec le couvercle de conduit (8B) est fabriqué complètement sous forme de conduit de câbles déplié.
